Europäisches Patentamt

European Patent Office

Office européen des brevets

(19)

(11) Numéro de publication : **0 113 613**
**B1**

# (12) FASCICULE DE BREVET EUROPÉEN

(45) Date de publication du fascicule du brevet :
28.05.86

(21) Numéro de dépôt : **83402349.1**

(22) Date de dépôt : **06.12.83**

(51) Int. Cl.⁴ : **A 47 C  7/46**, A 47 C  31/12

(54) **Siège orthopédique ajustable, notamment pour véhicules automobiles.**

(30) Priorité : **07.12.82 FR 8220454**

(43) Date de publication de la demande :
**18.07.84 Bulletin 84/29**

(45) Mention de la délivrance du brevet :
**28.05.86 Bulletin 86/22**

(84) Etats contractants désignés :
**DE GB IT NL SE**

(56) Documents cités :
**DE-A- 2 222 532**
**FR-A- 2 187 269**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Rebiffe, Roger**
**7, rue N. Nicquet**
**F-78220 Viroflay (FR)**
Inventeur : **Fayard, Lionel**
**6, Lotissement de l'Ile Amourette**
**St. Gemme Moronval F-28500 Vernouillet (FR)**

(74) Mandataire : **Ernst-Schonberg, Michel et al**
**R.N.U.R. S. 0804 B.P. 103 8 & 10, avenue Emile-Zola**
**F-92109 Boulogne Billancourt (FR)**

Jouve, 18, rue St-Denis, 75001 Paris, France

## Description

L'invention concerne un siège orthopédique notamment pour véhicules adapté à la morphologie de l'utilisateur dont le tronc est maintenu et soutenu dans une position anatomiquement correcte, si bien qu'il n'occasionne aucun phénomène de fatigue ni ne produit de déformation de la colonne vertébrale susceptible de provoquer la lordose ou la cyphose.

L'invention propose un siège personnalisé rapidement ajustable à l'utilisateur.

L'invention concerne un siège susceptible d'être fabriqué en série et qui présente pour la plupart des conformations du tronc des conditions d'adaptation correctes sur le plan orthopédique.

On a déjà essayé de conformer les dossiers de sièges à la constitution anatomique de l'utilisateur, la forme du dossier obtenu ne peut pas s'adapter simplement aux exigences de confort recherchées au cours des changements de la position de conduite.

On connait déjà des dossiers de sièges qui soutiennent le tronc au niveau des reins et du thorax. On connait également des supports lombaires galbés qui sont rapportés sur le dossier du siège et qui excercent sur le dos une pression de confort.

Les dossiers de sièges connus ou modifiés présentent toutefois l'inconvénient de repousser vers l'avant la partie postérieure du bassin vertébral et engendrent une fatigue supplémentaire des jambes du fait du mauvais soutien conféré aux cuisses.

Pour remédier à cet inconvénient, le brevet FR-A-1 202 006 propose l'adjonction dans le rembourrage même du dossier d'un coussin ajustable.

Un système de réglage en continu de l'appui dorsal est connu par le DE-B-1 274 003. Dans ce cas, l'appui dorsal est constitué par un ressort d'appui attaché des deux côtés du siège dont le cintrage peut être modifié au moyen d'un mécanisme antagoniste à vis. Ce système autorise certes un réglage fin, mais une grande course de réglage est indispensable pour que des efforts de réglage soient réduits.

Avec le système connu du DE-A-1 914 154, les courses de réglage sont plus réduites, mais les points d'application des efforts se déplacent suivant une courbe, de sorte que la position de l'appui se déplace, soit vers le haut, soit vers le bas.

On connait en outre par le DE-U-7 617 960 un appui dorsal consistant en des manchons pneumatiques. Des pompes équipées chacune d'un clapet d'échappement permettent de régler individuellement la pression intérieure de chaque manchon et d'adapter l'appui dorsal aux besoins de l'utilisateur. Une modification de l'effet d'appui durant la marche du véhicule est difficile, en particulier pour le conducteur, et n'est rendue possible que si l'organe de manœuvre a été conçu pour pouvoir être utilisé d'une seule main.

On connait par le FR-A-2 460 227 un siège dans lequel l'appui dorsal est une unité structurelle ayant la forme d'un organe creux dont la taille est modifiable par variation de la pression intérieure. Les variations volumétriques de l'organe creux sont ici très localisées et ne sont pas transmises aux parties latérales du dossier.

On connait par le FR-A-2 096 133 un siège dont le dossier est équipé d'un coussin contenant une masse poreuse compressible élastiquement mise en communication avec une source de dépression. Cette source règle l'épaisseur du coussin jusqu'à ce que sa rigidité soit suffisante pour résister à la compression due à la charge communiquée par l'utilisateur du siège. On constate toutefois, qu'une telle conception du dossier est inadaptée aux nécessités d'un maintien latéral du tronc et de la lordose sacro-lombaire au cours des changements de posture de l'utilisateur du siège.

On connaît par le DE-A-2 222 532 un siège dont le dossier porte une zone d'appui réglable constituée par une chambre gonflable dont le remplissage et l'échappement sont asservis à la mise en charge du coussin.

L'invention a donc pour objet un siège qui puisse durant la marche du véhicule être réglé rapidement et facilement, à configuration reproductible de telle sorte qu'une réadaptation rapide du siège soit possible lors d'un changement de l'utilisateur.

A cet effet, l'invention prévoit l'application d'un appui dorsal et latéral ajustables constitué par deux organes creux recouverts d'un rembourrage et raccordés à un système de réglage actionné par l'intermédiaire d'un ensemble manipulateur, et est caractérisé par le fait que l'un des organes creux de forme prédéterminée est constitué par un ensemble de trois coussins pneumatiques compartimentés, respectivement en appui sur des supports latéraux du rembourrage et sur la surface de charge de l'armature du dossier, qui sont reliés à une source de pression et que l'autre organe creux repose sur lesdits coussins pneumatiques, et est constitué par une enveloppe imperméable cloisonnée contenant une couche de particules, qui est réunie à une source de dépression.

Dans ce qui suit, l'invention est expliquée plus en détail à l'aide d'un exemple d'exécution du siège illustré par le dessin dans lequel :

la figure 1 est une vue en perspective de l'armature du siège avec l'ensemble des appuis montés sur le dossier.

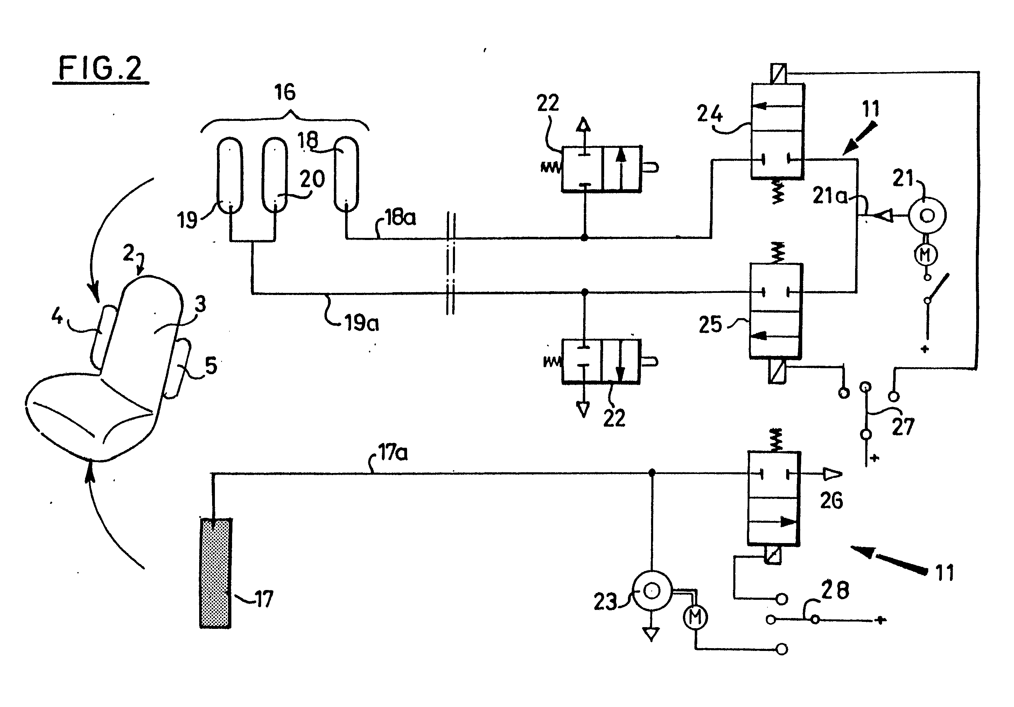

la figure 2 est une représentation schématique de l'ensemble des unités structurelles d'appui utilisant un asservissement pneumatique.

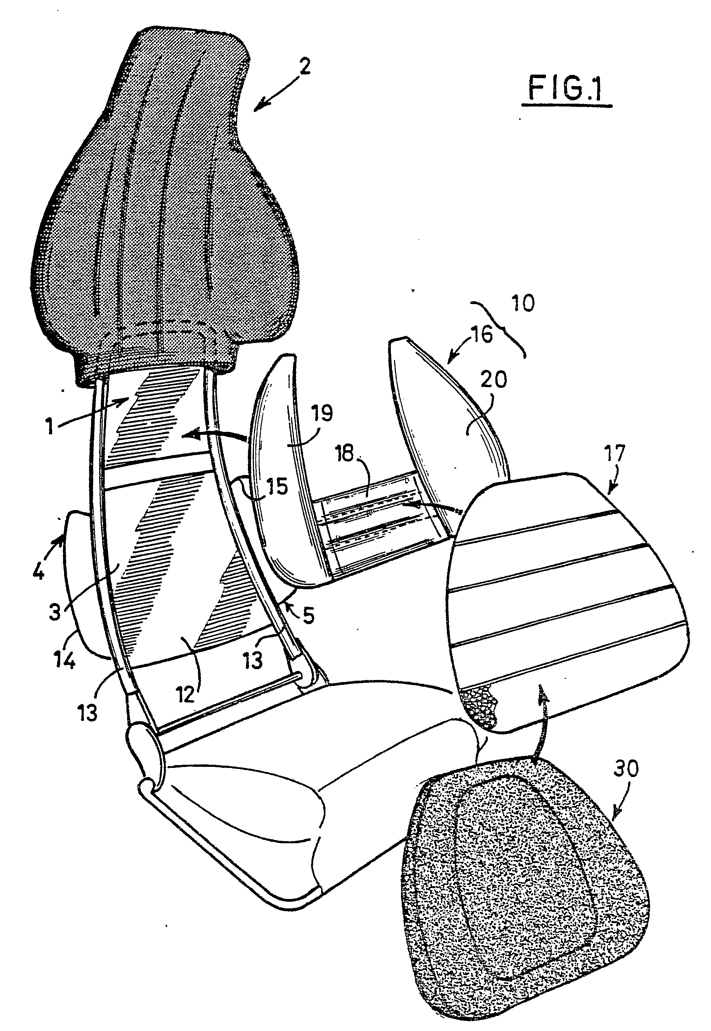

la figure 1 représente une zone d'appui dorsal 3 disposé sur l'armature du dossier 1 d'un siège de véhicule automobile recouvert d'un rembourrage 2.

La zone d'appui dorsal 3 se prolonge à droite et à gauche par deux zones d'appuis latéraux 4, 5. Un système de réglage 10 actionné par l'intermédiaire d'organes de manœuvre tel qu'un ensemble manipulateur 11 repose, d'une part sur l'armature rigide 12 qui définit la surface de charge du dossier, et qui est fixé ainsi que cela est connu entre les montants latéraux 13 de l'armature du dossier, et d'autre part sur des supports 14, 15 des coussins de rembourrage additionnels respectivement portés par les montants latéraux 13. Le système de réglage 10 est recouvert par une garniture de fibres 30 agglomérées par un liant approprié, dans le but de conférer au siège la perméabilité et l'aération souhaitées et d'assurer une meilleure répartition des pressions du tronc sur le dossier. Le système de réglage 10 et la garniture de fibres sont recouverts par le rembourrage 2 et constituent de la sorte l'ensemble des appuis dorsal 3 et latéraux 4, 5.

Le système de réglage est ici constitué par deux unités structurelles superposées 16, 17 dont la taille est modifiable par variation de leur pression interne. A cet effet, chacune des unités 16, 17 est constituée par un organe creux dont les parois sont imperméables au gaz. L'unité 16 qui repose sur l'armature 12 possède une forme prédéterminée par l'assemblage de trois coussins gonflables compartimentés 18, 19, 20 dont la configuration générale est en correspondance avec les différentes zones d'appui 3, 4, 5 et qui sont solidaires entre eux de manière à définir trois capacités gonflables séparément ou simultanément sous l'action des impulsions de gonflage communiquée par l'ensemble manipulateur 11.

La structure utilisée par la confection des coussins 18, 19, 20 permet l'obtention de la taille et de la forme prédéterminées recherchées lorsque ceux-ci sont soumis à deux pressions de gonflage. A cet effet, le coussin central 18 et l'ensemble des coussins latéraux 19, 20 sont respectivement réunis au moyen de tuyauteries 18a, 19a, à l'ensemble manipulateur 11. Selon le mode de réalisation représenté, l'ensemble manipulateur 11 est raccordé par une autre tuyauterie 21a à une source de pression 21 pouvant être par exemple une pompe à membrane ou une poire de gonflage actionnée depuis le tableau de bord ou le plancher du véhicule. Des soupapes de décharge 22 montées sur les tuyauteries 18a, 19a assurent la mise à l'atmosphère des coussins 18, 19, 20 et leur dégonflage.

Selon un mode de réalisation possible, l'ensemble manipulateur 11 est constitué par un ensemble de trois distributeurs pneumatiques à 2 voies et deux positions 24, 25, 26 commandés par les impulsions transmises par deux contacteurs électriques 27, 28. Les contacteurs 27, 28 à trois positions commandent respectivement les distributeurs 24, 25 et le distributeur 26. L'unité 17 qui repose sur les coussins 18, 19, 20 possède une forme prédéterminée et est constituée par une enveloppe PVC cloisonnée contenant une couche de particules telles que des billes de polystyrène. Cette enveloppe est réunie au moyen d'une tuyauterie 17a à une source de dépression 23 constituée, par exemple, par une pompe à vide actionnée par l'ensemble manipulateur 11.

Un exemple de réalisation d'une unité 17 est décrit dans : IAM TECHNICAL MEMORANDUM N° 253 « A RAPID METHOD OF CASTING BODY CONTOURS » BY DR J.C. FITZGERALD (Sept. 1965).

On conçoit aisément qu'en l'absence de dépression, l'unité 17 est à l'état neutre et se comporte comme une couche de rembourrage. Lorsque la succion s'établit, les parois de l'enveloppe compriment les billes de polystyrène sans variation sensible de volume, en créant une cohésion entre les billes qui durcit la couche dans la position requise par la posture assise de l'utilisateur du siège.

La mise en œuvre du siège implique le gonflage de l'unité 16 au moyen des grandeurs de réglage communiquées par impulsiona à partir du manipulateur 11. L'augmentation de taille des coussins 18, 19, 20 permet d'obtenir un préajustage du rembourrage extérieur 2 aux surfaces d'appui dorsal et latéral conformément à la morphologie de l'utilisateur du siège.

La mise en dépression de l'unité 17 assure la répartition des pressions de contact recherchées par l'utilisateur du siège dans la posture adoptée.

Le gonflage partiel ou total de l'unité 16 permet de modifier la dureté de la suspension du siège conformément aux souhaits de l'utilisateur.

Le siège ainsi réalisé assure une meilleure répartition des pressions de contact sans impression d'inconfort.

On peut bien entendu modifier la répartition des pression à chaque changement de la posture de conduite en supprimant temporairement le vide dans l'unité 17 puis en le rétablissant.

Sans sortir du cadre de l'invention, il sera bien entendu possible d'utiliser le même principe d'ajustage à la confection d'un appui-tête et/ou d'un coussin de l'assise du siège.

## Revendication

Siège orthopédique notamment pour véhicules automobiles du type comportant au moins une zone d'appui (3, 4, 5) recouverte d'un rembourrage (2), et un système de réglage (10) actionné par l'intermédiaire d'un ensemble manipulateur (11) dont les impulsions sont transformées en des grandeurs de réglage des pressions de contact de la zone d'appui et de la rigidité dudit appui constitué par un ensemble superposé de deux organes creux (16, 17) dont le volume est modifiable par variation de leur pression intérieure, caractérisé par le fait que l'un (16) des organes creux de forme prédéterminée est constitué par un ensemble de trois coussins pneumatiques (18, 19, 20) compartimentés, respectivement en appui sur des supports latéraux (14, 15) du rembourrage (2) et sur la surface de charge (12) de l'armature du dossier, qui sont reliés à une source de pression (21) et que l'autre organe creux (17), repose sur lesdits coussins pneumatiques (18, 19, 20), et est constitué par une enveloppe imperméable cloisonnée contenant une couche de particules, qui est réunie à une source de dépression.

## Claim

An orthopaedic seat, in particular for motor vehicles, of the type comprising at least one support region (3, 4, 5) covered by padding (2), and a regulating system (10) actuated by way of a manipulator assembly (11) whose pulses are converted into parameters for regulating the contact pressures of the support region and the rigidity of said support which is formed by a superposed assembly of two hollow members (16, 17) whose volume can be modified by varying their internal pressure, characterised in that one (16) of the hollow members of predetermined shape is formed by an assembly of three compartmented pneumatic cushions (18, 19, 20) respectively bearing on lateral supports (14, 15) of the padding (2) and on the load surface (12) of the framework of the back, which are connected to a pressure source (21), and that the other hollow member (17) rests on said pneumatic cushions (18, 19, 20) and is formed by an impermeable partitioned casing containing a layer of particles, which is connected to a depression source.

## Patentanspruch

Orthopädischer Sitz, insbesondere für Kraftfahrzeuge, der wenigstens einen mit einem Polster (2) bedeckten Stützbereich (3, 4, 5) aufweist, sowie ein Einstellsystem (10), das mittels einer Steueranordnung (11) betätigt wird, deren Impulse umgewandelt werden in Steuerwerte der Kontaktdrucke des Stützbereichs und der Steifigkeit der Stützung und das aus einer überlagerten Anordnung zweier Hohlteile (16, 17) gebildet ist, deren Volumen durch Variation des Innendrucks veränderbar ist, dadurch gekennzeichnet, daß eines (16) der Hohlteile vorgegebener Form aus einer Anordnung dreier, unterteilter, pneumatischer Kissen (18, 19, 20) besteht, die sich auf Seitenführungen (14, 15) des Polsters (2) bzw. auf der Belastungsfläche (12) der Rückenlehne abstützen, wobei sie mit einer Druckquelle (21) verbunden sind, und daß das andere Hohlteil (17) auf den pneumatischen Kissen (18, 19, 20) ruht und aus einer mit Zwischenwänden versehenen, dichten Hülle besteht, die eine Teilchenschicht enthält und die mit einer Unterdruckquelle verbunden ist.

0 113 613

FIG.1

# FIG.2